# EUROPEAN PATENT APPLICATION

(11) **EP 4 738 508 A1**
(43) Date of publication of application: **06.05.2026**
(21) Application number: 25203609.0
(22) Date of filing: 22.09.2025
(51) Int. Cl.: H01M 10/0562

(54) **SOLID ELECTROLYTE MEMBRANE AND PREPARING METHOD AND APPLICATION THEREOF**

(30) Priority: 31.10.2024 CN 202411545099
(71) Applicant: AESC Japan Ltd., Yokohama-shi, Kanagawa 220-0012 (JP)
(72) Inventor: YU, Le, Pudong New Area Shanghai, 201315 (CN); WU, Ming, Pudong New Area Shanghai, 201315 (CN)
(74) Representative: Becker, Eberhard

(57) **Abstract**

The disclosure proposes a solid electrolyte membrane and a preparation method and an application thereof. The solid electrolyte membrane includes a binder and a sulfide solid electrolyte. The sulfide solid electrolyte has a molecular formula of Li_{f}P_{1-g}E_{g}S_{w}O_{g}Q_{z}, wherein, 5<f<10; 0<g<1, 3<w<6, 4<w+g<6, 0<z<2; E is selected from one or more of Mg, Ca, Sr, Ba, Zn, Cr, Sn or Pb; Q is selected from one or more of Cl, Br or I. Ionic conductivity of the solid electrolyte membrane is 1×10⁻³S/cm to 2×10⁻²S/cm. Through the solid electrolyte membrane and the preparation method and the application thereof proposed by the disclosure, the stability of the conductivity of the solid electrolyte membrane may be enhanced, the air stability may be enhanced, and the lifetime and safety of all-solid-state lithium-ion batteries may be improved.

## Description

### BACKGROUND

### Technical Field

This disclosure relates to the technical field of lithium-ion batteries, and specifically relates to a solid electrolyte membrane and a preparation method and an application thereof.

### Description of Related Art

With the rapid development of new energy technology, lithium-ion batteries are widely applied due to their advantages such as high energy density and long cycle lifetime. However, traditional lithium-ion batteries use liquid electrolyte, which has safety hazards such as electrolyte leakage and combustion. To overcome these disadvantages, solid electrolyte materials have received widespread attention. Among them, sulfide solid electrolyte is highly favored due to its high ionic conductivity and good mechanical performance. Currently, various sulfide solid electrolyte materials have been developed, such as Li₁₀GeP₂S₁₂ or Li₆PS₅Cl.

However, most current sulfide electrolytes have poor chemical stability and are prone to decomposition in air, generating toxic hydrogen sulfide gas, which causes harm to the environment and human health, and the production conditions require strict requirements, increasing production complexity and cost. In addition, the interface compatibility between sulfide solid electrolyte and electrode materials also needs to be improved, with large interface impedance, affecting battery performance.

### SUMMARY

The disclosure proposes a solid electrolyte membrane and a preparation method and an application thereof. Through the solid electrolyte membrane and the preparation method and the application thereof proposed by the disclosure, the stability of the conductivity of the solid electrolyte membrane may be enhanced, the air stability may be enhanced, electrolyte/active material interface properties may be improved, and the lifetime and safety of all-solid-state lithium-ion batteries may be improved.

To solve the above technical problems, the disclosure proposes a solid electrolyte membrane, at least including a binder; and a sulfide solid electrolyte. The sulfide solid electrolyte has a molecular formula of Li_{f}P_{1-g}E_{g}S_{w}O_{g}Q_{z}; wherein, 5<f<10; 0<g<1, 3<w<6, 4<w+g<6, 0<z<2; E is selected from one or more of Mg, Ca, Sr, Ba, Zn, Cr, Sn or Pb; Q is selected from one or more of Cl, Br or I.

Ionic conductivity of the solid electrolyte membrane is 1×10⁻³S/cm to 2×10⁻²S/cm.

In one embodiment of the disclosure, E is Mg.

In one embodiment of the disclosure, Q is selected from Cl; a value range of g is 0.01≤g≤0.1.

In one embodiment of the disclosure, a thickness of the solid electrolyte membrane is 1µm to 200µm.

In one embodiment of the disclosure, a mass ratio of the binder to the sulfide solid electrolyte is 0.1:99.9 to 10:90.

The disclosure also provides a preparing method of the solid electrolyte membrane described above, including the following steps.

According to a chemical formula of the sulfide solid electrolyte, raw materials are mixed uniformly according to stoichiometry, placed in a ball mill jar for ball milling to obtain sulfide solid electrolyte precursor powder.

The sulfide solid electrolyte precursor powder is calcined at a preset temperature to obtain the sulfide solid electrolyte.

The sulfide solid electrolyte is mixed with the binder, and the solid electrolyte membrane is obtained through dry method preparation or wet method preparation.

In one embodiment of the disclosure, the Li source is selected from one or more of LiCl, LiBr, LiI or Li₂S; the P source is selected from one or more of elemental P, P₂S₅, P₄S₆, PCl₅ or PBr₅; the E source is selected from one or more of oxide of E or sulfide of E; the S source is selected from one or more of elemental S, Li₂S, P₂S₅, P₄S₆, MgS, CaS, SrS, BaS, ZnS, CrS, SnS or PbS; the Q source is selected from one or more of LiCl, PCl₅, LiBr, PBr₅, LiI or I₂; the O element in the chemical formula comes from the oxide of E.

In one embodiment of the disclosure, when the solid electrolyte membrane is prepared by dry method, the binder is selected from a first binder, the first binder is selected from one or more of polytetrafluoroethylene, ethylene-tetrafluoroethylene copolymer, fluorinated ethylene propylene copolymer, perfluoroalkoxy resin, polychlorotrifluoroethylene, ethylene-chlorotrifluoroethylene copolymer, polyvinylidene fluoride, polyvinylidene fluoride-hexafluoropropylene copolymer or polyvinylidene fluoride-chlorotrifluoroethylene copolymer.

In one embodiment of the disclosure, when the solid electrolyte membrane is prepared by wet method, the binder is selected from a second binder, the second binder is selected from one or more of polyvinylidene fluoride, carboxymethyl cellulose, styrene-butadiene rubber, polyvinylpyrrolidone, polymethyl methacrylate, polyacrylonitrile, polyacrylic acid, polyurethane, polyvinyl alcohol, sodium alginate, ethylene-propylene-diene monomer, styrene-butadiene rubber, fluororubber, β-cyclodextrin polymer, polypropylene emulsion, polytetrafluoroethylene, ethylene-tetrafluoroethylene copolymer, fluorinated ethylene propylene copolymer, perfluoroalkoxy resin, polychlorotrifluoroethylene, ethylene-chlorotrifluoroethylene copolymer, polyvinylidene fluoride-hexafluoropropylene copolymer or polyvinylidene fluoride-chlorotrifluoroethylene copolymer.

The disclosure also provides an all-solid-state lithium-ion battery, at least including a cathode electrode sheet, the cathode electrode sheet including halide solid electrolyte, the halide solid electrolyte including Li_{2.35}Zr_{0.65}Fe_{0.35}Cl₅Br_{0.5}I_{0.5}; an anode electrode sheet; and a solid electrolyte membrane, the solid electrolyte membrane being disposed between the adjacent cathode electrode sheet and anode electrode sheet, the solid electrolyte membrane being selected from the solid electrolyte membrane described above.

The disclosure also provides an electronic device, including the all-solid-state lithium-ion battery.

In summary, the disclosure proposes a solid electrolyte membrane and a preparation method and an application thereof. By introducing E element, O element and Q element into the sulfide solid electrolyte within the solid electrolyte membrane, the air stability of the solid electrolyte membrane is effectively improved, the H₂S gas generated by atmospheric degradation is reduced, and the air stability and chemical stability of the solid electrolyte membrane are enhanced. A special medium layer can be formed at the electrolyte/lithium metal anode interface, which can ensure the ionic conductivity of the solid electrolyte membrane and promote the rapid movement of lithium-ions and uniform distribution of electric field. It can help control the nucleation and growth of lithium, prevent the formation of lithium dendrites, can significantly improve the stability and performance of lithium-ion batteries, improve the lifetime and safety of all-solid-state lithium-ion batteries, and can improve the compatibility between the solid electrolyte membrane and active materials.

To make the aforementioned more comprehensible, several embodiments accompanied with drawings are described in detail as follows.

### BRIEF DESCRIPTION OF THE DRAWINGS

In order to more clearly illustrate the technical solutions of the embodiments of the disclosure, the drawings required for describing the embodiments are briefly introduced below. Obviously, the drawings described below are merely some embodiments of the disclosure. For those of ordinary skill in the art, other drawings may also be obtained according to these drawings without creative effort.
FIG. 1 is a process schematic diagram of dry method preparation of solid electrolyte membrane according to one embodiment of the disclosure.
FIG. 2 is a room temperature 1C/1C long cycle performance diagram of an all-solid-state lithium-ion battery in embodiment 3.

### DESCRIPTION OF THE EMBODIMENTS

The following specific examples illustrate the embodiments of the disclosure. Those skilled in the art may easily understand other advantages and effects of the disclosure from the content disclosed in this specification. The disclosure may also be implemented or applied through other different specific implementations, and various details in this specification may also be modified or changed based on different viewpoints and applications without departing from the spirit of the disclosure.

It should be understood that the disclosure may be implemented in different forms and should not be interpreted as being limited to the embodiments presented herein. On the contrary, providing these embodiments makes the disclosure thorough and complete, and fully conveys the scope of the disclosure to those skilled in the art.

The technical solutions of the disclosure are described in further detail below in conjunction with several embodiments. Obviously, the described embodiments are merely part of the embodiments of the disclosure, rather than all embodiments. Based on the embodiments in the disclosure, all other embodiments obtained by those of ordinary skill in the art without creative effort fall within the protection scope of the disclosure.

The disclosure proposes a solid electrolyte membrane, the solid electrolyte membrane includes a binder and a sulfide solid electrolyte, wherein the molecular formula of the sulfide solid electrolyte is Li_{f}P_{1-g}E_{g}S_{w}O_{g}Q_{z}. 5<f<10; 0<g<1, 3<w<6, 4<w+g<6, 0<z<2, E is selected from one or more of Mg, Ca, Sr, Ba, Zn, Cr, Sn or Pb, Q is selected from one or more of Cl, Br or I. Introducing E element and O element into the halogen-rich sulfide solid electrolyte forms P-O and E-S bonds in the crystal structure, effectively improving the air stability of the sulfide solid electrolyte, reducing H₂S gas generated by atmospheric degradation, and enhancing the air stability and chemical stability of the sulfide solid electrolyte. In addition, when using this sulfide solid electrolyte to assemble an all-solid-state lithium-ion battery, a special medium layer may be formed at the electrolyte/lithium metal anode interface. This medium layer includes components such as LiCl, Li₂O and Li-Mg alloy. Li₂O has good ionic conductivity, while Li-Mg alloy promotes rapid movement of lithium-ions and uniform distribution of electric field. The high interfacial energy of LiCl helps control lithium nucleation and growth, preventing the formation of lithium dendrites. These characteristics combined effectively promote the diffusion of lithium-ions between electrodes and inhibit the growth of lithium dendrites. Therefore, the sulfide solid electrolyte provided by the disclosure may significantly improve the stability and performance of lithium-ion batteries, improving the lifetime and safety of all-solid-state lithium-ion batteries.

In one embodiment of the disclosure, E is exemplified as selected from Mg, doping Mg may induce electron clustering around S atoms, inhibit electron acceptance of Li, while the generated self-limiting interface hinders the redox reaction between the sulfide electrolyte and Li metal. That is, through doping Mg, the electron distribution in the sulfide solid electrolyte may be regulated, electron acceptance of Li may be inhibited, thereby reducing parasitic redox reactions between the electrolyte and metallic lithium, improving the cycle stability and performance of the battery, and enhancing the practicality and reliability of the sulfide electrolyte.

In one embodiment of the disclosure, Q is selected from halogen elements, and according to different halogens, the degree of anion disorder between 4a and 4c sites in the sulfide solid electrolyte crystal structure is different, from a small amount of antisite defects when Q is I to 60% site disorder when Q is Cl, and the lithium conductivity of these compounds mainly depends on the degree of disorder of anion and cation site occupation. Therefore, Q is exemplified as selected from Cl to improve the ionic conductivity and electrochemical stability of the sulfide solid electrolyte, and improve voltage stability. The value range of g is 0.01≤g≤0.1. When the doping amount is too low, an effective medium layer may not be formed. Excessive doping causes excessive lattice distortion, destroying the original crystal structure, which may lead to decreased structural stability of the material, and even phase separation or amorphization phenomena, thereby reducing the ionic conductivity of the material. In one specific embodiment of the disclosure, g is optimally 0.02 to improve the cycle performance of lithium-ion batteries.

In one embodiment of the disclosure, the thickness of the solid electrolyte membrane is exemplified as 1µm to 200µm, the ionic conductivity is exemplified as 1×10⁻³S/cm to 2×10⁻²S/cm, and the ionic conductivity is relatively stable at low temperature, the solid electrolyte membrane may be prepared in batches in a dry room with low dew point, greatly simplifying the preparation process and reducing the preparation cost. Moreover, the solid electrolyte membrane provided by the disclosure may well match lithium metal anodes, and all-solid-state lithium batteries with high energy density and high performance may be prepared.

In one embodiment of the disclosure, the mass ratio of binder to sulfide solid electrolyte is 0.1:99.9 to 10:90, and the binder is selected from one of a first binder or a second binder. The first binder is selected from one or several of polytetrafluoroethylene (PTFE), ethylene tetrafluoroethylene copolymer (ETFE), fluorinated ethylene propylene (FEP), polyfluoroalkoxy resin (PFA), polychlorotrifluoroethylene (PCTFE), ethylene-chlorotrifluoroethylene copolymer (ECTFE), polyvinylidene fluoride (PVDF), polyvinylidene fluoride-hexafluoropropylene copolymer or polyvinylidene fluoride-trifluorochloroethylene copolymer. The second binder is selected from at least one or more of PVDF, carboxymethyl cellulose (CMC), polymerized styrene butadiene rubber (SBR), polyvinyl pyrrolidone (PVP), polymethyl methacrylate (PMMA), polyacrylonitrile (PAN), polyacrylic acid (PAA), polyurethane, polyvinyl alcohol (PVA), sodium alginate (Alg), ethylene-propylene-diene monomer, styrene-butadiene rubber, fluoroelastomer, β-cyclodextrin polymer (β-CDp), polypropylene emulsion (LA132), PTFE, ETFE, FEP, PFA, PCTFE, ECTFE, polyvinylidene fluoride-hexafluoropropylene copolymer or vinylidene fluoride-trifluorochloroethylene copolymer. By adding binder, the processability of the solid electrolyte membrane may be improved, volume expansion may be alleviated, the structure of the solid electrolyte membrane may be stabilized, and a self-supporting solid electrolyte membrane may be obtained.

The disclosure also proposes a preparing method of a solid electrolyte membrane, for preparing the aforementioned solid electrolyte membrane, at least including: according to the chemical formula of the sulfide solid electrolyte, mixing raw materials uniformly according to stoichiometry, placing in a ball mill jar for ball milling to obtain sulfide solid electrolyte precursor powder; calcining the sulfide solid electrolyte precursor powder at a preset temperature to obtain sulfide solid electrolyte; mixing the sulfide solid electrolyte with binder, obtaining the solid electrolyte membrane through dry method preparation or wet method preparation.

In one embodiment of the disclosure, according to the chemical formula Li_{f}P_{1-g}E_{g}S_{w}O_{g}Q_{z} of the sulfide solid electrolyte, Li source, P source, E source, S source and Q source are mixed uniformly according to stoichiometry. The Li source is selected from one or more of LiCl, LiBr, LiI or Li₂S, etc., the P source is selected from one or more of elemental P, P₂S₅, P₄S₆, PCl₅ or PBr₅, etc., the E source is selected from one or more of oxide of E or sulfide of E, the S source is selected from one or more of elemental S, Li₂S, P₂S₅, P₄S₆, MgS, CaS, SrS, BaS, ZnS, CrS, SnS or PbS, etc., the Q source is selected from one or more of LiCl, PCl₅, LiBr, PBr₅, LiI or I₂, etc., the O element in the chemical formula comes from the oxide of E. After the raw materials are mixed uniformly, they are placed in a ball mill jar, and ball milling is conducted under inert atmosphere. The ball-to-material ratio is exemplified as 1:1 to 100:1, the ball milling speed is exemplified as 50rpm to 1500rpm, the ball milling time is exemplified as 1h to 48h. The sulfide solid electrolyte precursor powder is obtained.

In one embodiment of the disclosure, the sulfide solid electrolyte precursor powder is calcined at a preset temperature, wherein the preset temperature is 400°C to 600°C, the calcining time is 1h to 18h, to obtain the sulfide solid electrolyte.

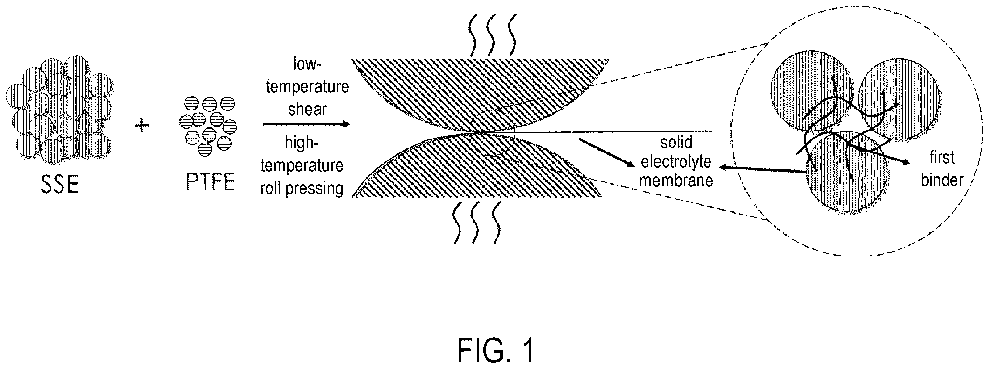

Please refer to FIG. 1. In one embodiment of the disclosure, when the solid electrolyte membrane adopts dry method preparation, for example, adopting powder extrusion molding method, the binder is selected from a first binder. Specifically, after mixing the sulfide solid electrolyte and the first binder uniformly through low-temperature shear, rapidly heating for high-temperature shear mixing to obtain mixed material, adding the mixed material into a roll press for high-temperature roll pressing to obtain the solid electrolyte membrane. The mass ratio of the first binder to the sulfide solid electrolyte is exemplified as 0.1:99.9 to 5:95, the low-temperature shear temperature is exemplified as -30°C to 15°C, the high-temperature shear temperature is exemplified as 20°C to 200°C, the high-temperature roll pressing temperature is exemplified as 20°C to 200°C. In the dry method preparation process, the first binder wraps around the sulfide solid electrolyte in a network form, which can enhance the mechanical strength and chemical stability of the solid electrolyte membrane, may maintain stable contact between the electrolyte and electrode materials during battery charge and discharge processes, thereby improving the performance and lifetime of the battery.

In one embodiment of the disclosure, when the solid electrolyte membrane adopts wet method preparation, for example, adopting wet coating method and electrostatic spraying method, the binder is selected from a second binder. Specifically, mixing the sulfide solid electrolyte, the second binder and solvent uniformly to obtain electrolyte slurry, then coating the electrolyte slurry on a substrate through wet coating or electrostatic spraying method, followed by drying and peeling the substrate coated with electrolyte slurry to obtain the solid electrolyte membrane. The solvent is exemplified as selected from at least one of toluene, chlorobenzene, xylene, dimethyl carbonate, N-methylformamide, n-hexane, ethylene glycol dimethyl ether, dibutyl ether, ethanol, 1,2-ethylenediamine, 1,2-ethanedithiol, acetonitrile, tetrahydrofuran, methanol, diisopropyl ether, acetone, hexene, ethyl acetate, benzyl acetate, butyl butyrate or diisobutyl ketone. In the electrolyte slurry, the content of sulfide solid electrolyte is exemplified as 30wt% to 90wt%, the content of the second binder is exemplified as 0.1wt% to 10wt%, the content of solvent is exemplified as 10wt% to 50wt%, after drying, the mass ratio of the second binder to the sulfide solid electrolyte is exemplified as 0.1:30 to 10:90. The substrate is exemplified as selected from polyethylene glycol terephthalate (PET) film, smooth aluminum foil or release paper for easy demolding. The drying temperature is exemplified as 30°C to 250°C.

The disclosure also proposes an all-solid-state lithium-ion battery, including a cathode electrode sheet, an anode electrode sheet and a solid electrolyte membrane, the solid electrolyte membrane is disposed between adjacent cathode electrode sheet and anode electrode sheet. The solid electrolyte membrane is selected from the aforementioned solid electrolyte membrane to improve the performance of the all-solid-state lithium-ion battery.

In one embodiment of the disclosure, the cathode electrode sheet includes cathode active material and halide solid electrolyte, the cathode active material is exemplified as selected from one or more of lithium nickel cobalt manganese oxide (NCM), lithium nickel oxide (LNO), lithium manganese oxide (LMO), lithium nickel manganese oxide (LNMO), lithium cobalt oxide (LCO) or lithium nickel cobalt aluminum oxide (NCA). The halide solid electrolyte includes Li_{2.35}Zr_{0.65}Fe_{0.35}Cl₅Br_{0.5}I_{0.5}, the halide solid electrolyte does not undergo exothermic reaction with delithiated cathode active material, improving the safety of lithium-ion battery. The cathode electrode sheet further includes conductive agent and binder, wherein the conductive agent is exemplified as one or combination of at least two of conductive carbon black (Super P, SP), carbon nanotube (CNT), vapor grown carbon fiber (VGCF) or graphene. The binder is exemplified as polytetrafluoroethylene (PTFE) and its derivatives.

In one embodiment of the disclosure, the mass ratio of cathode active material, halide solid electrolyte, conductive agent and binder is exemplified as (65-78):(20-30):(1-3):(1-2). In this embodiment, the mass ratio of cathode active material, halide solid electrolyte, conductive agent and binder is exemplified as 69:29:1:1. The conductive agent is a combination of conductive carbon black (super-P) and vapor grown carbon fiber (VGCF), and the mass ratio of conductive carbon black and vapor grown carbon fiber is 1:1, the binder is exemplified as polytetrafluoroethylene. After mixing the cathode active material, halide solid electrolyte, conductive agent and binder uniformly, mixed powder is obtained, and the cathode electrode sheet is obtained through dry method pressing.

In one embodiment of the disclosure, the anode electrode sheet is exemplified as one or more of metal lithium sheet, metal indium sheet or lithium indium alloy sheet, the anode electrode sheet is also exemplified as including anode active material. The anode active material is selected from one or more of graphite materials, silicon materials or composite materials of graphite materials and silicon materials. In one embodiment of the disclosure, when the anode electrode sheet includes anode active material, the anode electrode sheet further includes solid electrolyte, conductive agent and binder, wherein the solid electrolyte is exemplified as halide solid electrolyte or sulfide electrolyte, the disclosure does not make specific limitation. The binder is exemplified as at least one of polyisoprene, polyethylene or polypropylene, the conductive agent is exemplified as at least one of carbon nanotube, carbon fiber or acetylene black, the disclosure does not limit the ratio of anode active material, conductive agent and binder, selection is conducted according to manufacturing requirements, and the anode electrode sheet is exemplified as obtained through dry method pressing.

In one embodiment of the disclosure, the anode electrode sheet is exemplified as selecting metal lithium sheet, the above cathode electrode sheet, solid electrolyte membrane and anode electrode sheet are sequentially conducted through stacking, packaging, hot pressing and cold pressing operations, and externally packaged with aluminum plastic film under vacuum or inert atmosphere, to obtain all-solid-state pouch lithium-ion battery. The assembly process of the all-solid-state lithium-ion battery is exemplified as completed in a glove box with argon atmosphere.

Hereinafter, the disclosure is explained more specifically through reference to embodiments, and these embodiments should not be understood as limiting. Within the scope consistent with the gist of the disclosure, appropriate modifications may be conducted, all of which fall within the technical scope of the disclosure.

### Embodiment 1

Preparation of sulfide solid electrolyte: 2.03 mol of Li₂S, 1.5 mol of LiCl, 0.49 mol of P₂S₅ and 0.02 mol of MgO are obtained as precursor powder through high-energy ball milling, wherein the ball-to-material ratio is 30:1, and the rotation speed is 500 rpm. The precursor powder is sintered at 500°C temperature for 10h, and after cooling, Li_{5.56}P_{0.98}Mg_{0.02}S_{4.48}O_{0.02}Cl_{1.5} sulfide solid electrolyte is obtained.

Preparation of solid electrolyte membrane: electrolyte Li_{5.56}P_{0.98}Mg_{0.02}S_{4.48}O_{0.02}Cl_{1.5} and PTFE are mixed uniformly at mass ratio of 99:1 at -20°C, and the temperature is raised to 80°C for mixing to fibrillate PTFE, obtaining mixed material. The mixed material is extruded into a roll press, at 80°C, by adjusting the roll press gap, the solid electrolyte membrane is roll-pressed to a thickness of 5µm.

Preparation of cathode electrode sheet: LiNi_{0.8}Co_{0.1}Mn_{0.1}O₂, conductive agent, Li_{2.35}Zr_{0.65}Fe_{0.35}Cl₅Br_{0.5}I_{0.5} and PTFE are prepared by mixing at mass ratio of 69:1:29:1, and the cathode electrode sheet is prepared by dry method, wherein the conductive agent is super-P and VGCF at mass ratio of 1:1.

Anode electrode sheet: the anode sheet is selected as a lithium metal sheet.

Assembly of all-solid-state battery: the cathode electrode sheet, solid electrolyte membrane and anode electrode sheet prepared above are assembled into an all-solid-state pouch battery through stacking, packaging, hot pressing and cold pressing processes.

Assembly of symmetric battery: counter electrodes Li are placed on both sides of the solid electrolyte membrane, and assembled with the solid electrolyte membrane into Li/Li symmetric battery.

### Embodiment 2

By adjusting the roll press gap, the thickness of the solid electrolyte membrane is prepared to 10µm, and other operations maintain consistency with Embodiment 1.

### Embodiment 3

By adjusting the roll press gap, the thickness of the solid electrolyte membrane is prepared to 30µm, and other operations maintain consistency with Embodiment 1.

### Embodiment 4

By adjusting the roll press gap, the thickness of the solid electrolyte membrane is prepared to 50µm, and other operations maintain consistency with Embodiment 1.

### Embodiment 5

By adjusting the roll press gap, the thickness of the solid electrolyte membrane is prepared to 100µm, and other operations maintain consistency with Embodiment 1.

### Embodiment 6

By adjusting the roll press gap, the thickness of the solid electrolyte membrane is prepared to 200µm, and other operations maintain consistency with Embodiment 1.

### Embodiment 7

The chemical formula of the sulfide solid electrolyte obtained through 2.015mol of Li₂S, 1.5mol of LiCl, 0.495mol of P₂S₅ and 0.01mol of MgO is Li_{5.53}P_{0.99}Mg_{0.01}S_{4.49}O_{0.01}Cl_{1.5}, and other operations maintain consistency with Embodiment 3.

### Embodiment 8

The chemical formula of the sulfide solid electrolyte obtained through 2.0225mol of Li₂S, 1.5mol of LiCl, 0.4925mol of P₂S₅ and 0.015mol of MgO is L_{15.545}P_{0.985}Mg_{0.O15}S_{4.485}O_{0.O15}C1_{1.5}, and other operations maintain consistency with Embodiment 3.

### Embodiment 9

The chemical formula of the sulfide solid electrolyte obtained through 2.06mol of Li₂S, 1.5mol of LiCl, 0.48mol of P₂S₅ and 0.04mol of MgO is Li_{5.62}P_{0.96}Mg_{0.04}S_{4.46}O_{0.04}Cl_{1.5}, and other operations maintain consistency with Embodiment 3.

### Embodiment 10

The chemical formula of the sulfide solid electrolyte obtained through 2.09mol of Li₂S, 1.5mol of LiCl, 0.47mol of P₂S₅ and 0.06mol of MgO is Li_{5.68}P_{0.94}Mg_{0.06}S_{4.44}O_{0.06}Cl_{1.5}, and other operations maintain consistency with Embodiment 3.

### Embodiment 11

The chemical formula of the sulfide solid electrolyte obtained through 2.12mol of Li₂S, 1.5mol of LiCl, 0.46mol of P₂S₅ and 0.08mol of MgO is L1_{5.74}P_{0.92}Mg_{0.08}S_{4.42}O_{0.02}Cl_{1.5}, and other operations maintain consistency with Embodiment 3.

### Embodiment 12

The chemical formula of the sulfide solid electrolyte obtained through 2.15mol of Li₂S, 1.5mol of LiCl, 0.45mol of P₂S₅ and 0.1mol of MgO is Li_{5.8}P_{0.9}Mg_{0.1}S_{4.48}O_{0.1}Cl_{1.5}, and other operations maintain consistency with Embodiment 3.

### Embodiment 13

The chemical formula of the sulfide solid electrolyte obtained through 1.83mol of Li₂S, 1.9mol of LiCl, 0.49mol of P₂S₅ and 0.02mol of MgO is Li_{5.16}P_{0.98}Mg_{0.02}S_{4.08}O_{0.02}Cl_{1.9}, and other operations maintain consistency with Embodiment 3.

### Embodiment 14

The chemical formula of the sulfide solid electrolyte obtained through 2.53mol of Li₂S, 1mol of LiCl, 0.49mol of P₂S₅ and 0.02mol of MgO is Li_{6.06}P_{0.98}Mg_{0.02}S_{4.98}O_{0.02}Cl, and other operations maintain consistency with Embodiment 3.

### Embodiment 15

The chemical formula of the sulfide solid electrolyte obtained through 3.03mol of Li₂S, 0.5mol of LiCl, 0.49mol of P₂S₅ and 0.02mol of MgO is Li_{6.56}P_{0.98}Mg_{0.02}S_{5.48}O_{0.02}Cl_{0.5}, and other operations maintain consistency with Embodiment 3.

### Embodiment 16

The chemical formula of the sulfide solid electrolyte obtained through 3.43mol of Li₂S, 0.1mol of LiCl, 0.49mol of P₂S₅ and 0.02mol of MgO is Li_{6.96}P_{0.98}Mg_{0.02}S_{5.88}O_{0.02}Cl_{0.1}, and other operations maintain consistency with Embodiment 3.

### Embodiment 17

The chemical formula of the sulfide solid electrolyte obtained through 2.03mol of Li₂S, 1.4mol of LiCl, 0.lmol of LiBr, 0.49mol of P₂S₅ and 0.02mol of MgO is Li_{5.56}P_{0.98}Mg_{0.02}S_{4.48}O_{0.02}Cl_{1.4}Br_{0.1}, and other operations maintain consistency with Embodiment 3.

### Embodiment 18

The chemical formula of the sulfide solid electrolyte obtained through 2.03mol of Li₂S, 1.3mol of LiCl, 0.1mol of LiBr, 0.1mol of LiI, 0.49mol of P₂S₅ and 0.02mol of MgO is Li_{5.56}P_{0.98}Mg_{0.02}S_{4.48}O_{0.02}Cl_{1.3}Br_{0.1}I_{0.1}, and other operations maintain consistency with Embodiment 3.

### Embodiment 19

The binder selected is ETFE, and other operations maintain consistency with Embodiment 3.

### Example 20

The binder selected is PCTFE, and other operations maintain consistency with Embodiment 3.

### Embodiment 21

Preparation of sulfide solid electrolyte: 2.03mol of Li₂S, 1.5mol of LiCl, 0.49mol of P₂S₅ and 0.02mol of MgO raw materials are subjected to high-energy ball milling to obtain precursor powder, wherein the ball-to-material ratio is 30:1 and the rotation speed is 500rpm. The precursor powder is sintered at 500°C temperature for 10h, and after cooling, Li_{5.56}P_{0.98}Mg_{0.02}S_{4.48}O_{0.02}Cl_{1.5} sulfide solid electrolyte is obtained.

Preparation of solid electrolyte membrane: Li_{5.56}P_{0.98}Mg_{0.02}S_{4.48}O_{0.02}Cl_{1.5}, SBR binder and xylene solvent are mixed uniformly according to a mass ratio of 49:1:50 to form electrolyte slurry, and the electrolyte slurry is coated on smooth aluminum foil using a film coater, and vacuum dried at 80°C and peeled off to prepare a 30µm thick solid electrolyte membrane.

Preparation of cathode electrode sheet: LiNi_{0.8}Co_{0.1}Mn_{0.1}O₂, conductive agent, Li_{2.35}Zr_{0.65}Fe_{0.35}Cl₅Br_{0.5}I_{0.5} and PTFE are prepared by mixing according to a mass ratio of 69:1:29:1, and the cathode electrode sheet is prepared by dry method, wherein the conductive agent is super-P and VGCF with a mass ratio of 1:1.

Anode electrode sheet: the anode sheet is selected as a lithium metal sheet.

Assembly of all-solid-state battery: the above-prepared cathode electrode sheet, solid electrolyte membrane and anode electrode sheet are subjected to stacking, packaging, hot pressing and cold pressing processes to assemble into an all-solid-state pouch battery.

Assembly of symmetric battery: counter electrodes Li are placed on both sides of the solid electrolyte membrane, and assembled with the solid electrolyte membrane into Li/Li symmetric battery.

### Embodiment 22

The binder selected is PVDF, and other operations maintain consistency with Embodiment 21.

### Embodiment 23

The binder selected is PAA, and other operations maintain consistency with Embodiment 21.

### Embodiment 24

The chemical formula of the sulfide solid electrolyte obtained through 2.03 mol of Li₂S, 1.5 mol of LiCl, 0.49 mol of P₂S₅ and 0.02 mol of CaO is Li_{5.56}P_{0.98}Ca_{0.02}S_{4.48}O_{0.02}Cl_{1.5}, and other operations maintain consistency with Embodiment 3.

### Embodiment 25

The chemical formula of the sulfide solid electrolyte obtained through 2.03 mol of Li₂S, 1.5 mol of LiCl, 0.49 mol of P₂S₅ and 0.02 mol of ZnO is Li_{5.56}P_{0.98}Zn_{0.02}S_{4.48}O_{0.02}Cl_{1.5}, and other operations maintain consistency with Embodiment 3.

### Comparative Example 1

The chemical formula of the electrolyte obtained through 2 mol of Li₂S, 1.5 mol of LiCl, 0.5 mol of P₂S₅ is Li_{5.5}PS_{4.5}Cl_{1.5}, and other operations maintain consistency with Embodiment 3.

### Comparative Example 2

The chemical formula of the sulfide solid electrolyte obtained through 2 mol of Li₂S, 1.4 mol of LiCl, 0.1 mol of LiBr and 0.5 mol of P₂S₅ is Li_{5.5}PS_{4.5}Cl_{1.4}Br_{0.1}, and other operations maintain consistency with Embodiment 3.

### Comparative Example 3

The chemical formula of the electrolyte obtained through 2 mol of Li₂S, 1.3 mol of LiCl, 0.1 mol of LiBr, 0.1 mol of LiI and 0.5 mol of P₂S₅ is Li_{5.5}PS_{4.5}Cl_{1.3}Br_{0.1}I_{0.1}, and other operations maintain consistency with Embodiment 3.

### Comparative Example 4

By adjusting the roll press gap, the thickness of the solid electrolyte membrane is prepared to 1µm, and other operations maintain consistency with Embodiment 3.

In the disclosure, Embodiments 1 to 25 and Comparative Examples 1 to 4 adopt different solid electrolyte membranes, conduct testing on the ionic conductivity of the solid electrolyte membranes, and place the solid electrolyte membranes exposed in a dry room at -40°C for 24h, then conduct ionic conductivity testing again. In this embodiment, ionic conductivity is obtained through methods such as AC impedance method, and the test results are shown in Table 1.

In the disclosure, Embodiments 1 to 25 and Comparative Examples 1 to 4 adopt different sulfide solid electrolytes to obtain lithium-ion batteries, under 25°C environment, conduct long cycle charge-discharge on the above-prepared lithium-ion batteries, measure their discharge capacity, and calculate to obtain energy density. The working voltage range of battery testing is 2.5V to 4.3V, the charge-discharge rate is 1C/1C. The discharge capacity of the first cycle is recorded as 1C discharge capacity, when the battery capacity reaches 80% of the first cycle capacity (80% State of Health, 80% SOH), the test is ended to obtain the room temperature cycle number. The symmetric battery is conducted with constant current charge-discharge cycle testing under current density of 1mA/cm², and the test results are shown in Table 2.

**Table 1: Ionic conductivity of sulfide solid electrolytes in Embodiments 1 to 25 and Comparative Examples 1 to 4**

| group | solid electrolyte membrane electrolyte chemical formula | solid electrolyte membrane ionic conductivity (S/cm) | ionic conductivity (S/cm) after exposure to - 40° dry room for 24h | ionic conductivity retention rate after exposure to -40°C dry room for 24h | solid electrolyte membrane thickness (µm) |
|---|---|---|---|---|---|
| Embodiment 1 | Li_{5.56}P_{0.98}Mg_{0.02}S_{4.48}O_{0.02}Cl_{1.5} | 7.26×10⁻³ | 3.96×10⁻³ | 54.55% | 5 |
| Embodiment 2 | Li_{5.56}P_{0.98}Mg_{0.02}S_{4.48}O_{0.02}Cl_{1.5} | 7.26×10⁻³ | 4.33× 10⁻³ | 59.64% | 10 |
| Embodiment 3 | Li_{5.56}P_{0.98}Mg_{0.02}S_{4.48}O_{0.02}Cl_{1.5} | 7.26×10⁻³ | 5.29×10⁻³ | 72.87% | 30 |
| Embodiment 4 | Li_{5.56}P_{0.98}Mg_{0.02}S_{4.48}O_{0.02}Cl_{1.5} | 7.26×10⁻³ | 5.3×10⁻³ | 73.00% | 50 |
| Embodiment 5 | Li_{5.56}P_{0.98}Mg_{0.02}S_{4.48}O_{0.02}Cl_{1.5} | 7.26×10⁻³ | 5.31×10⁻³ | 73.14% | 100 |
| Embodiment 6 | Li_{5.56}P_{0.98}Mg_{0.02}S_{4.48}O_{0.02}Cl_{1.5} | 7.26×10⁻³ | 5.33×10⁻³ | 73.42% | 200 |
| Embodiment 7 | Li_{5.53}P_{0.90}Mg_{0.01}S_{4.49}O_{0.01}Cl_{1.5} | 7.81×10⁻³ | 2.21×10⁻³ | 28.30% | 30 |
| Embodiment 8 | Li_{5.545}P_{0.985}Mg_{0.015}S_{4.485}O_{0.015}Cl_{1.5} | 7.43×10⁻³ | 2.99×10⁻³ | 40.24% | 30 |
| Embodiment 9 | Li_{5.62}P_{0.96}Mg_{0.04}S_{4.46}O_{0.04}Cl_{1.5} | 5.94×10⁻³ | 4.35×10⁻³ | 73.23% | 30 |
| Embodiment 10 | Li_{5.68}P_{0.94}Mg_{0.06}S_{4.44}O_{0.06}Cl_{1.5} | 5.13×10⁻³ | 3.78×10⁻³ | 73.68% | 30 |
| Embodiment 11 | Li_{5.74}P_{0.92}Mg_{0.08}S_{4.42}O_{0.02}Cl_{1.5} | 4.31×10⁻³ | 3.18×10⁻³ | 73.78% | 30 |
| Embodiment 12 | Li_{5.8}P_{0.9}Mg_{0.1}S_{4.48}O_{0.1}Cl_{1.5} | 3.13×10⁻³ | 2.31×10⁻³ | 73.80% | 30 |
| Embodiment 13 | Li_{5.16}P_{0.98}Mg_{0.02}S_{4.08}O_{0.02}Cl_{1.9} | 1.01×10⁻³ | 6.70×10⁻⁴ | 66.34% | 30 |
| Embodiment 14 | Li_{6.06}P_{0.98}Mg_{0.02}S_{4.98}O_{0.02}Cl | 1.61×10⁻³ | 1.11×10⁻³ | 68.94% | 30 |
| Embodiment 15 | Li_{6.56}P_{0.98}Mg_{0.02}S_{5.48}O_{0.02}Cl_{0.5} | 1.31×10⁻³ | 8.53×10⁻⁴ | 65.12% | 30 |
| Embodiment 16 | Li_{6.96}P_{0.98}Mg_{0.02}S_{5.88}O_{0.02}Cl_{0.1} | 1.18×10⁻³ | 7.93×10⁻⁴ | 67.26% | 30 |
| Embodiment 17 | Li_{5.56}P_{0.98}Mg_{0.02}S_{4.48}O_{0.02}Cl_{1.4}Br_{0.1} | 6.38×10⁻³ | 4.15×10⁻³ | 65.05% | 30 |
| Embodiment 18 | Li_{5.56}P_{0.98}Mg_{0.02}5_{4.48}O_{0.02}Cl_{1.3}Br_{0.1}I_{0.1} | 5.87×10⁻³ | 3.84×10⁻³ | 65.42% | 30 |
| Embodiment 19 | Li_{5.56}P_{0.98}Mg_{0.02}S_{4.48}O_{0.02}Cl_{1.5} | 7.13×10⁻³ | 5.16×10⁻³ | 72.45% | 30 |
| Embodiment 20 | Li_{5.56}P_{0.98}Mg_{0.02}S_{4.48}O_{0.02}Cl_{1.5} | 7.04×10⁻³ | 5.29×10⁻³ | 72.33% | 30 |
| Embodiment 21 | Li_{5.56}P_{0.98}Mg_{0.02}S_{4.48}O_{0.02}Cl_{1.5} | 5.95×10⁻³ | 4.32×10⁻³ | 72.63% | 30 |
| Embodiment 22 | Li_{5.56}P_{0.98}Mg_{0.02}S_{4.48}O_{0.02}Cl_{1.5} | 6.04×10⁻³ | 4.37×10⁻³ | 72.47% | 30 |
| Embodiment 23 | Li_{5.56}P_{0.98}Mg_{0.02}S_{4.48}O_{0.02}Cl_{1.5} | 6.23×10⁻³ | 4.53×10⁻³ | 72.79% | 30 |
| Embodiment 24 | Li_{5.56}P_{0.98}Ca_{0.02}S_{4.48}O_{0.02}Cl_{1.5} | 4.69×10⁻³ | 2.51×10⁻³ | 53.62% | 30 |
| Embodiment 25 | Li_{5.56}P_{0.98}Zn_{0.02}S_{4.48}O_{0.02}Cl_{1.5} | 5.23×10⁻³ | 3.2×10⁻³ | 61.25% | 30 |
| Comparative Example 1 | Li_{5.5}PS_{4.5}Cl_{1.5} | 7.47×10⁻³ | 8.4×10⁻⁴ | 11.24% | 30 |
| Comparative Example 2 | Li_{5.5}PS_{4.5}Cl_{1.4}Br_{0.1} | 6.28×10⁻³ | 8.5×10⁻⁴ | 13.54% | 30 |
| Comparative Example 3 | Li_{5.5}PS_{4.5}Cl_{1.3}Br_{0.1}I_{0.1} | 5.83×10⁻³ | 9.44×10⁻⁴ | 16.19% | 30 |
| Comparative Example 4 | Li_{5.56}P_{0.98}Mg_{0.02}S_{4.48}O_{0.02}Cl_{1.5} | 7.26×10⁻³ | 2.45×10⁻³ | 33.79% | 1 |

**Table 2: Test results of lithium-ion batteries and symmetric batteries in Embodiments 1 to 25 and Comparative Examples 1 to 4**

| group | room temperature 1C/1C cycle number (80% SOH) | Li/Li symmetric battery cycle time at 1mA/cm² (h) |
|---|---|---|
| Embodiment 1 | 163 (short circuit) | 381 |
| Embodiment 2 | 177 (short circuit) | 409 |
| Embodiment 3 | 481 | 1017 |
| Embodiment 4 | 448 | 951 |
| Embodiment 5 | 435 | 925 |
| Embodiment 6 | 402 | 859 |
| Embodiment 7 | 107 (short circuit) | 269 |
| Embodiment 8 | 175 (short circuit) | 405 |
| Embodiment 9 | 438 | 931 |
| Embodiment 10 | 385 | 825 |
| Embodiment 11 | 313 | 681 |
| Embodiment 12 | 433 | 921 |
| Embodiment 13 | 145 | 345 |
| Embodiment 14 | 154 | 363 |
| Embodiment 15 | 131 | 317 |
| Embodiment 16 | 118 | 291 |
| Embodiment 17 | 419 | 893 |
| Embodiment 18 | 381 | 817 |
| Embodiment 19 | 473 | 1001 |
| Embodiment 20 | 467 | 989 |
| Embodiment 21 | 453 | 961 |
| Embodiment 22 | 459 | 973 |
| Embodiment 23 | 464 | 983 |
| Embodiment 24 | 303 | 656 |
| Embodiment 25 | 396 | 842 |
| Comparative Example 1 | 1 (short circuit) | 57 |
| Comparative Example 2 | 3 (short circuit) | 61 |
| Comparative Example 3 | 4 (short circuit) | 63 |
| Comparative Example 4 | 46 (short circuit) | 147 |

Please refer to Table 1 and Table 2. Comparing Embodiments 1 to 6 and Comparative Example 4, it can be known that with the increase of the thickness of the solid electrolyte membrane, the retention rate of ionic conductivity of the solid electrolyte membrane at low temperature increases, and the cycle performance of the lithium-ion battery first increases gradually, then decreases gradually. And when the solid electrolyte membrane is too thin, battery short circuit occurs at lower cycle numbers. Therefore, combining the retention rate of ionic conductivity and cycle performance, there exists a preferred range for the thickness of the solid electrolyte membrane.

Please refer to Table 1 and Table 2. Comparing Embodiments 3 and 7 to 12, it can be known that when element E in the sulfide solid electrolyte is selected as Mg, with the increase of Mg doping amount, the cycle performance of the lithium-ion battery increases gradually, then decreases gradually. And with the increase of element E doping amount, the ionic conductivity of the solid electrolyte membrane decreases, but the ionic conductivity retention rate after exposure to -40°C dry room for 24h increases, enhancing the air stability and chemical stability of the solid electrolyte membrane, improving the stability and performance of the battery. This shows that appropriate element E doping may help form stable Solid Electrolyte Interface (SEI), reducing side reactions between the solid electrolyte and electrode materials. When the doping amount is too low, it may be unable to form effective SEI membrane. Excessive doping causes excessive lattice distortion, destroying the original crystal structure, which may cause the structural stability of the material to decrease, and even phase separation or amorphization phenomena may occur, thereby reducing the ionic conductivity of the material. Therefore, controlling the doping amount of E in the sulfide solid electrolyte may enhance the cycle lifetime and safety of all-solid-state lithium-ion batteries while maintaining ionic conductivity at a high level, ensuring the rate performance of lithium-ion batteries, improving charge-discharge efficiency and cycle lifetime.

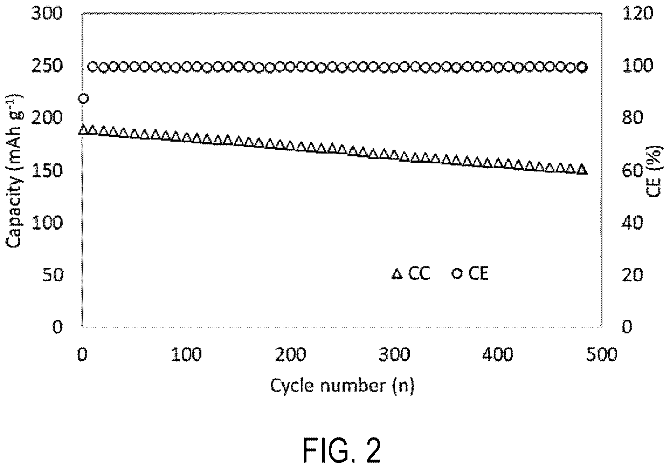

Please refer to FIG. 2. In the all-solid-state lithium-ion battery of Embodiment 3 during room temperature cycling, the current density adopted for constant current charge-discharge is 1C. As can be seen from FIG. 2, under the current density of 1C, the all-solid-state lithium-ion battery in Embodiment 3 still has energy storage capacity of about 140mAh/g after 500 cycles, indicating that the sulfide solid electrolyte has excellent reaction kinetics and cycle stability. The obtained solid electrolyte membrane has good enhancement effect on the cycle stability and reaction activity specific capacity of the battery, and the all-solid-state lithium-ion battery combines excellent specific capacity, rate performance and cycle lifetime and other performances.

Please refer to Table 1 and Table 2. Comparing Embodiments 3 and 13 to 16, it can be known that when the Mg element doping amount is the same, increasing and decreasing Cl element content cause serious decrease in ionic conductivity, and both reduce the cycle performance of the lithium-ion battery. Therefore, the content of Cl element is controlled to ensure the ionic conductivity of the sulfide solid electrolyte and the performance of the lithium-ion battery.

Please refer to Table 1 and Table 2. Comparing Embodiments 3 and 17 to 18, it can be known that when the Mg element doping amount is the same, doping one or more of Br or I elements will reduce the cycle performance of the battery. This is because the doped Br or I may introduce additional lattice defects, and these defects may become obstacles to lithium-ion transport, further reducing the ionic conductivity of the electrolyte. Therefore, selecting Cl element as Q may improve the ionic conductivity and electrochemical stability of the sulfide solid electrolyte, improving voltage stability.

Please refer to Table 1 and Table 2. Comparing Embodiments 3, 17 to 18 and Comparative Examples 1 to 3, it can be known that when E element and O element are not added to the sulfide solid electrolyte, the lithium-ion battery has almost no cycle performance and short circuit occurs quickly, indicating that when E element and O element are lacking, the chemical stability of the sulfide solid electrolyte material is poor, the mechanical strength is insufficient, and it is difficult to ensure the long-term cycle performance of the lithium-ion battery. Through introducing E element and O element, the cycle performance of the lithium-ion battery may be improved. Comparing Embodiments 3 and 24 to 25, it can be known that when E doping element is selected as other elements, it may also increase the ionic conductivity retention rate, improve the stability of the sulfide solid electrolyte, and improve the cycle performance of the lithium-ion battery, but it is weaker than Mg doping. Therefore, when doping Mg, the performance of the lithium-ion battery is optimal.

Please refer to Table 1 and Table 2. Comparing Embodiments 3 and 19 to 20, it can be known that in the dry method preparation process, when selecting different first binders, the ionic conductivity of the solid electrolyte membrane and the performance of the lithium-ion battery are also affected. When the first binder is selected from PTFE, the ionic conductivity of the solid electrolyte membrane and the performance of the lithium-ion battery are optimal. Comparing Embodiments 21 to 23, it can be known that in the wet method preparation process, when selecting different second binders, the ionic conductivity of the solid electrolyte membrane and the performance of the lithium-ion battery are also affected. When the second binder is selected from PAA, the ionic conductivity of the solid electrolyte membrane and the performance of the lithium-ion battery are optimal. Comparing Embodiments 3 and 21, it can be known that the solid electrolyte membrane prepared by dry method process has better performance than the solid electrolyte membrane prepared by wet method process. This is because a large amount of organic solvent is used in the wet method process, and the organic solvent reacts slightly with the electrolyte, thereby reducing the performance of the electrolyte membrane, while the dry method process does not introduce solvent.

The disclosure also provides an electronic device. The electronic device includes at least one of the lithium-ion batteries, the lithium-ion battery is used for providing electrical energy. The electronic device may be a vehicle, mobile phone, portable device, laptop computer, ship, spacecraft, electric toy and electric tool, etc. In one embodiment of the disclosure, the vehicle is exemplified as a new energy vehicle, the new energy vehicle may be a pure electric vehicle, hybrid vehicle or range-extended vehicle, etc. The spacecraft includes aircraft, rocket, space shuttle and spaceship, etc. The electric toy includes fixed or mobile electric toys, for example including game console, electric car toy, electric ship toy and electric aircraft toy, etc. The electric tool includes metal cutting electric tool, grinding electric tool, assembly electric tool and railway electric tool, for example, including electric drill, electric grinder, electric wrench, electric screwdriver, electric hammer, impact drill, concrete vibrator and electric planer, etc. The electronic device includes the lithium-ion battery, therefore includes the advantages of the lithium-ion battery, which is not elaborated here.

In summary, the disclosure proposes a solid electrolyte membrane and a preparation method and an application thereof. By introducing E element, O element and Q element into the sulfide solid electrolyte within the solid electrolyte membrane, the air stability of the solid electrolyte membrane is effectively improved, the H₂S gas generated by atmospheric degradation is reduced, and the air stability and chemical stability of the solid electrolyte membrane are enhanced. A special medium layer can be formed at the electrolyte/lithium metal anode interface, which can ensure the ionic conductivity of the solid electrolyte membrane and promote the rapid movement of lithium-ions and uniform distribution of electric field. It can help control the nucleation and growth of lithium, prevent the formation of lithium dendrites, can significantly improve the stability and performance of lithium-ion batteries, improve the lifetime and safety of all-solid-state lithium-ion batteries, and can improve the compatibility between the solid electrolyte membrane and active materials.

## Claims

1. A solid electrolyte membrane, comprising:
a binder; and
a sulfide solid electrolyte, **characterized in that**, the sulfide solid electrolyte has a molecular formula of Li_{f}P_{1-g}E_{g}S_{w}O_{g}Q_{z}; wherein, 5<f<10; 0<g<1, 3<w<6, 4<w+g<6, 0<z<2; E is selected from one or more of Mg, Ca, Sr, Ba, Zn, Cr, Sn or Pb; Q is selected from one or more of Cl, Br or I,
wherein an ionic conductivity of the solid electrolyte membrane being 1×10⁻³S/cm to 2×10⁻²S/cm.

2. The solid electrolyte membrane according to claim 1, wherein E is Mg.

3. The solid electrolyte membrane according to claim 1, wherein Q is Cl; a value range of g is 0.01≤g≤0.1.

4. The solid electrolyte membrane according to claim 1, wherein a thickness of the solid electrolyte membrane is 1µm to 200µm.

5. The solid electrolyte membrane according to claim 1, wherein a mass ratio of the binder to the sulfide solid electrolyte is 0.1:99.9 to 10:90.

6. A preparing method of the solid electrolyte membrane according to any one of claims 1 to 5, comprising:
according to the molecular formula of the sulfide solid electrolyte, mixing raw materials uniformly according to stoichiometry, placing the mixed raw materials in a ball mill jar for ball milling to obtain a sulfide solid electrolyte precursor powder;
calcining the sulfide solid electrolyte precursor powder at a preset temperature to obtain the sulfide solid electrolyte; and
mixing the sulfide solid electrolyte with the binder, and obtaining the solid electrolyte membrane through a dry method or a wet method.

7. The preparing method of the solid electrolyte membrane according to claim 6, wherein a Li source of the mixed raw materials is selected from one or more of LiCl, LiBr, LiI or Li₂S; a P source of the mixed raw materials is selected from one or more of elemental P, P₂S₅, P₄S₆, PCl₅ or PBr₅; a E source of the mixed raw materials is selected from one or more of oxide of E or sulfide of E; a S source of the mixed raw materials is selected from one or more of elemental S, Li₂S, P₂S₅, P₄S₆, MgS, CaS, SrS, BaS, ZnS, CrS, SnS or PbS; a Q source of the mixed raw materials is selected from one or more of LiCl, PCl₅, LiBr, PBr₅, LiI or I₂; the O element in the molecular formula comes from the oxide of E.

8. The preparing method of the solid electrolyte membrane according to claim 6, wherein when the solid electrolyte membrane is prepared by the dry method, the binder is a first binder, the first binder is selected from one or more of polytetrafluoroethylene, ethylene-tetrafluoroethylene copolymer, fluorinated ethylene propylene copolymer, perfluoroalkoxy resin, polychlorotrifluoroethylene, ethylene-chlorotrifluoroethylene copolymer, polyvinylidene fluoride, polyvinylidene fluoride-hexafluoropropylene copolymer or polyvinylidene fluoride-chlorotrifluoroethylene copolymer.

9. The preparing method of the solid electrolyte membrane according to claim 6, wherein when the solid electrolyte membrane is prepared by the wet method, the binder is a second binder, the second binder is selected from one or more of polyvinylidene fluoride, carboxymethyl cellulose, styrene-butadiene rubber, polyvinylpyrrolidone, polymethyl methacrylate, polyacrylonitrile, polyacrylic acid, polyurethane, polyvinyl alcohol, sodium alginate, ethylene-propylene-diene monomer, styrene-butadiene rubber, fluororubber, β-cyclodextrin polymer, polypropylene emulsion, polytetrafluoroethylene, ethylene-tetrafluoroethylene copolymer, fluorinated ethylene propylene copolymer, perfluoroalkoxy resin, polychlorotrifluoroethylene, ethylene-chlorotrifluoroethylene copolymer, polyvinylidene fluoride-hexafluoropropylene copolymer or polyvinylidene fluoride-chlorotrifluoroethylene copolymer.

10. An all-solid-state lithium-ion battery, comprising:
a cathode electrode sheet, the cathode electrode sheet comprising halide solid electrolyte, the halide solid electrolyte comprising Li_{2.35}Zr_{0.65}Fe_{0.35} Cl₅Br_{0.5}I_{0.5};
an anode electrode sheet; and
a solid electrolyte membrane, the solid electrolyte membrane being disposed between the adjacent cathode electrode sheet and the anode electrode sheet, the solid electrolyte membrane being selected from the solid electrolyte membrane according to any one of claims 1 to 5.

11. An electronic device, comprising the all-solid-state lithium-ion battery according to claim 10.
